# EUROPÄISCHE PATENTSCHRIFT

(11) **EP 2 900 943 B1**
(45) Veröffentlichungstag und Bekanntmachung des Hinweises auf die Patenterteilung: **31.10.2018**
(21) Anmeldenummer: 13762806.1
(22) Anmeldetag: 12.09.2013
(51) Int. Cl.: F01K 9/00, F01K 17/02

(54) **KRAFT-WÄRME-KRAFTWERK UND VERFAHREN ZUM BETRIEB EINES KRAFT-WÄRME-KRAFTWERKS**
COGENERATION POWER PLANT AND METHOD FOR OPERATING A COGENERATION POWER PLANT
CENTRALE DE COGÉNÉRATION ET PROCÉDÉ DE FONCTIONNEMENT D'UNE CENTRALE DE COGÉNÉRATION

(30) Priorität: 01.10.2012 DE 102012217929
(43) Veröffentlichungstag der Anmeldung: 05.08.2015
(73) Patentinhaber: Siemens Aktiengesellschaft, 80333 München (DE)
(72) Erfinder: REISSNER, Florian, 90475 Nürnberg (DE); SCHÄFER, Jochen, 90408 Nürnberg (DE)
(86) Internationale Anmeldenummer: PCT/EP2013/068897
(87) Internationale Veröffentlichungsnummer: WO 2014/053292

(56) Entgegenhaltungen:
- WO-A1-2012/049259
- DE-A1- 3 034 500
- DE-A1-102008 038 351
- US-A- 2 982 864
- US-A1- 2011 036 091

## Beschreibung

Die vorliegende Erfindung betrifft ein Kraft-Wärme-Kraftwerk und ein Verfahren zum Betrieb eines Kraft-Wärme-Kraftwerkes. Insbesondere betrifft die vorliegende Erfindung ein Kraft-Wärme-Kraftwerk mit einer Wärmepumpe und dem Betrieb eines Kraft-Wärme-Kraftwerkes mit einer solchen Wärmepumpe.

DE 10 2008 038 351 A1 offenbart ein Kraftwerk mit einer Wärmepumpe. Ein Arbeitsmedium wird in einem Kessel verdampft und treibt daraufhin eine Turbine an. Anschließend wird das Arbeitsmedium zunächst durch eine Wärmepumpe abgekühlt, dann einer Pumpe zugeführt und schließlich wieder von der Wärmepumpe erwärmt bevor es erneut in den Kessel gelangt.

DE 30 34 500 A1 beschreibt eine kompressorlose Wärmepumpe für den Einbau in einem Dampfkraftwerk.

US 2 982 864 A betrifft einen Wärmekreislauf für ein Kraftwerk mit einer Nutzung der dabei anfallenden thermischen Energie.

Die Erzeugung elektrischer Energie erfolgt auch heutzutage noch zu einem großen Teil durch thermische Kraftwerke. Als Brennstoff in solchen thermischen Kraftwerken werden beispielsweise Kohle, Erdgas, Biogas, Öl, Holz oder Holzprodukte verwendet. Solche thermischen Kraftwerke arbeiten vorzugsweise nach einem thermodynamischen Clausius-Rankine-Kreisprozess. Ein Arbeitsmedium, beispielsweise Wasser, wird dabei erhitzt, so dass es von einer flüssigen in einen gasförmigen Zustand übergeht und dabei eine Turbine antreibt. Da das Arbeitsmedium am Ausgang der Turbine immer noch eine relativ hohe Temperatur besitzt, muss es zunächst abgekühlt und kondensiert werden, bevor es in dem Kreisprozess erneut wieder erhitzt und verdampft werden kann. Wird die dabei während des Abkühlens entzogene Wärme an die Umgebung abgegeben, so besitzt dieses Kraftwerk einen relativ schlechten Nutzungsgrad.

Um den Wirkungsgrad des Gesamtsystems zu steigern, wird daher die am Turbinenausgang vorhandene Wärme zusätzlich für Heizzwecke genutzt. Die Verbraucher in dem Wärmekreislauf unterstützen dabei die Abkühlung des Arbeitsmediums, so dass einerseits weniger Energie ungenützt an die Umgebung abgegeben werden muss und darüber hinaus auch der zusätzliche Energiebedarf für das Abkühlen des Arbeitsmediums im Kraftwerk verringert wird. Daher besitzt ein solches Kraft-Wärme-System einen deutlich höheren Wirkungsgrad als ein Kraftwerk, das ausschließlich der Erzeugung elektrischer Energie dient.

Bei relativ hohen Vorlauftemperaturen im Heizkreislauf können die Rücklauftemperaturen in dem Heizkreislauf noch immer so hoch sein, dass das Arbeitsmedium zusätzlich gekühlt werden muss, bevor das Arbeitsmedium wieder zur Dampferzeugung erneut verwendet werden kann. Diese zusätzliche Kühlung erfordert einerseits den Einsatz weiterer Energie, und andererseits geht darüber hinaus die verbleibende Wärmeenergie des Trägermediums ungenutzt verloren.

Darüber hinaus besteht auf der Verbrauchsseite des Heizkreislaufes normalerweise ein Wärmebedarf, der nur in sehr seltenen Fällen mit der Wärmemenge korrespondiert, die bei der Erzeugung der elektrischen Energie anfällt. In den allermeisten Fällen unterscheidet sich die Wärmemenge aus der Erzeugung der elektrischen Energie im zeitlichen Verlauf deutlich von der Wärmemenge, die durch die thermischen Verbraucher des Wärmekreislaufes benötigt wird.

Wird bei relativ großem Bedarf elektrischer Energie nur eine verhältnismäßig kleine Wärmemenge durch den Verbraucher abgenommen, so muss die zusätzliche, überschüssige thermische Energie unter Einsatz weiterer Energie für die Kühlung ungenutzt an die Umgebung abgegeben werden. Besteht andererseits auf Seite der thermischen Verbraucher im Heizkreislauf ein Wärmebedarf, der größer ist als die Wärmemenge, die durch die Erzeugung der elektrischen Energie bereitgestellt werden kann, so kann der Wärmebedarf nicht ausreichend befriedigt werden und es muss auf andere Weise zusätzliche Heizenergie bereitgestellt werden, die in dem Heizkreislauf eingespeist wird.

Es besteht daher ein Bedarf nach einem Kraft-Wärme- Kraftwerk, bei dem auch die verbleibende thermische Energie aus dem Rücklauf des Heizkreislaufes möglichst effizient genutzt werden kann.

Weiterhin besteht ein Bedarf nach einem Kraft-Wärme-Kraftwerk, bei der der Vorlauf des Heizkreislaufes stets mit einer ausreichenden Menge an thermischer Energie gespeist werden kann.

Darüber hinaus besteht auch ein Bedarf nach einem Kraft-Wärme- Kraftwerk mit einem gesteigerten Gesamtwirkungsgrad.

Dies wird mit den Merkmalen der unabhängigen Patentansprüche erreicht.

Es ist eine Idee der vorliegenden Erfindung, den Rücklauf aus der Heizvorrichtung eines Kraft-Wärme-Kraftwerks mittels einer Wärmepumpe soweit abzukühlen, dass er eine ausreichend niedrige Temperatur für den Vorlauf eines Prozesses zur elektrischen oder mechanischen Energieerzeugung hat. Eine weitere Abkühlung des Arbeitsmediums durch Kühltürme oder Abgabe von Wärme an einen benachbarten Fluss ist somit nicht mehr erforderlich.

Ein erheblicher Vorteil der vorliegenden Erfindung besteht darin, dass die im Gesamtsystem anfallende Wärmemenge besonders effektiv genutzt werden kann. Der Rücklauf der Heizvorrichtung kann durch die Wärmepumpe soweit abgekühlt werden, dass er unmittelbar dem darauf wiederum folgenden Prozess für die elektrische oder mechanische Energieerzeugung zugeführt werden kann. Eine weitere Abkühlung durch Kühltürme oder beispielsweise einem benachbarten Fluss ist somit nicht mehr erforderlich.

Ein weiterer Vorteil besteht darin, dass die durch die Wärmepumpe entnommene Wärmemenge an anderer Stelle wiederum sinnvoll eingesetzt werden kann. Im Gegensatz zu einer Abkühlung, bei der die Wärme an die Umgebung abgegeben wird, kann somit eine weitere Steigerung des Gesamtwirkungsgrades erzielt werden.

Besonders vorteilhaft ist darüber hinaus, dass durch einen erfindungsgemäßen Einsatz einer Wärmepumpe auch Schwankungen bei einem Ungleichgewicht zwischen der erzeugten elektrischen oder mechanischen Energie auf der einen Seite und dem Wärmebedarf in der Heizvorrichtung auf der anderen Seite ausgeglichen werden können.

In einer bevorzugten Ausführungsform hat das Arbeitsmedium, das durch die Wärmepumpe erwärmt wird, eine Temperatur von mehr als 70 Grad Celsius. Vorzugsweise ist die Temperatur des durch die Wärmepumpe erwärmten Arbeitsmediums größer als 100 Grad Celsius, besonders bevorzugt größer als 115 Grad Celsius. Durch die Erwärmung des Arbeitsmediums auf ein so hohes Temperaturniveau kann eine Vorlauftemperatur für die Heizvorrichtung erreicht werden, der eine besonders günstige Speisung der Heizvorrichtung ermöglicht.

In einer Ausführungsform der vorliegenden Erfindung ist der Volumenstrom des Arbeitsmediums, das von der Wärmepumpe abgekühlt wird, kleiner als der Volumenstrom des Arbeitsmediums, das von der Wärmepumpe erwärmt wird. Dieses Ungleichgewicht der beiden Volumenströme bewirkt damit auch Unterschiede in der Anhebung beziehungsweise der Absenkung der Temperaturniveaus des Arbeitsmediums im Vor- und Rücklauf. Es kann somit auch bei einer nur relativ geringen Absenkung des Temperaturniveaus zwischen dem Ausgang des Wärmekreislaufes und dem Eingang des Energieerzeugers dennoch eine verhältnismäßig große Anhebung des Temperaturniveaus auf der anderen Seite der Wärmepumpe erreicht werden. Somit kann der Vorlauf des Wärmekreislaufes durch die Wärmepumpe in der Temperatur angehoben werden.

In einer Ausführungsform der vorliegenden Erfindung umfasst das erfindungsgemäße Kraft-Wärme-Kraftwerk mindestens einen thermischen Speicher. Durch den Einsatz solcher thermischen Speicher kann die Wärmeenergie in dem Gesamtsystem für einen bestimmten Zeitraum gespeichert werden. Somit kann überschüssige thermische Energie aus der Erzeugung der elektrischen Energie für einen späteren Zeitpunkt bevorratet werden und steht dann für Heizzwecke zur Verfügung, selbst wenn gerade nur ein geringer Bedarf an elektrischer Energie besteht.

Vorzugsweise handelt es sich bei dem thermischen Speicher um einen thermischen Speicher mit einem Phasenwechselmedium. Ein solcher thermischer Speicher mit einem Phasenwechselmedium ermöglicht in einem verhältnismäßig kleinen Volumen die Speicherung einer relativ großen Menge thermischer Energie.

In einer Ausführungsform ist die Wärmepumpe eine Hochtemperatur-Wärmepumpe. Solche Hochtemperatur-Wärmepumpen sind in der Lage, auf der Seite der Wärmeabgabe eine verhältnismäßig hohe Temperatur von mehr als 90 Grad Celsius zu erreichen. Diese Temperaturen wiederum ermöglichen die Anhebung eines Vorlaufs für den Wärmekreislauf auf ein besonders effizientes Niveau.

In einer bevorzugten Ausführungsform erzeugt der Energieerzeuger elektrische Energie. Elektrische Energie kann nicht, oder nur mit sehr hohem Aufwand gespeichert werden. Daher ist es erforderlich, die elektrische Energie genau zum Zeitpunkt des Verbrauches zu erzeugen. Die dabei anfallende thermische Energie kann erfindungsgemäß besonders effizient genutzt werden. Somit ist auch eine effiziente Nutzung der thermischen Energie möglich, selbst wenn der Bedarf an elektrischer und thermischer Energie gerade nicht gleich groß ist.

In einer besonderen Ausführungsform wird die Wärmepumpe unabhängig von dem Energieerzeuger betrieben. Die Wärmepumpe kann daher auch dann den Rücklauf des Wärmekreislaufes absenken und den Vorlauf entsprechend anheben, selbst wenn gerade keine, oder nur sehr wenig elektrische Energie erzeugt wird.

Besonders bevorzugt umfasst das erfindungsgemäße Verfahren ferner einen Schritt zum Speichern der thermischen Energie, die durch die Wärmepumpe abgegeben wird. Durch dieses Speichern der thermischen Energie in einem oder mehreren thermischen Energiespeichern kann insbesondere auch ein größeres Ungleichgewicht zwischen der Erzeugung elektrischer oder mechanischer Energie und dem thermischen Wärmebedarf ausgeglichen werden.

Vorzugsweise umfasst das Verfahren einen Schritt zum Speichern thermischen Energie, zwischen einer Heizvorrichtung und einer Wärmepumpe. Auch diese gespeicherte thermische Energie dient dem Ausgleich bei schwankendem Wärmebedarf.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines thermisches Prozesses zur Energieerzeugung;
- Fig. 2: eine schematische Darstellung eines Kraft-Wärme-Kraftwerks gemäß einer Ausführungsform der vorliegenden Erfindung; und
- Fig. 3: eine schematische Darstellung eines Verfahrens zum Betrieb eines Kraft-Wärme-Kraftwerkes gemäß einer Ausführungsform der vorliegenden Erfindung.

Die im Folgenden verwendete Richtungsterminologie, das heißt Begriffe wie "links", "rechts", "oben", "unten", "davor", "danach" und dergleichen dient lediglich dem besseren Verständnis der Zeichnungen und soll in keinem Fall eine Beschränkung der Allgemeinheit darstellen. Gleiche Bezugszeichen bezeichnen im Allgemeinen gleichartige oder gleichwirkende Komponenten. Die in den Figuren dargestellten Elemente sind aus Gründen der Übersichtlichkeit nicht notwendigerweise maßstabsgetreu abgebildet. Die in den Figuren dargestellten Komponenten und Elemente, deren Auslegung und Verwendung können im Sinne der Überlegungen eines Fachmanns variieren und an die jeweiligen Anwendungen angepasst werden.

Energieerzeuger im Sinne der vorliegenden Erfindung sind alle Arten von Vorrichtungen, die Energie, beispielsweise in Form einer mechanischen Bewegung oder in Form elektrischer Energie bereitstellen. Beispielsweise kann es sich bei einem Energieerzeuger um eine Turbine handeln, die eine Drehbewegung versetzt wird. Diese Drehbewegung kann daraufhin als Antrieb für weitere Vorrichtungen, insbesondere zum Antrieb eines Generators zum Erzeugen elektrischer Energie verwendet werden. Weitere Vorrichtungen zur Bereitstellung einer mechanischen Energieform, insbesondere einer Drehbewegung oder ähnlichem sind ebenso möglich. Ferner umfasst ein Energieerzeuger im Sinne der vorliegenden Erfindung auch grundsätzlich solche Vorrichtungen, die unmittelbar elektrische Energie bereitstellen können. Für die Bereitstellung dieser Energie durch einen Energieerzeuger im Sinne der vorliegenden Erfindung findet ein thermischer Prozess statt. Bei einem solchen thermischen Prozess kann es sich beispielsweise um eine Verbrennung handeln. Weitere thermische Prozesse, beispielsweise ein radioaktiver Zerfall oder eine exotherme chemische Reaktion sind ebenso möglich.

Eine Heizvorrichtung im Sinne der vorliegenden Erfindung ist eine Vorrichtung, die von einem Wärmeträgermedium durchströmt wird und dabei thermische Energie an einen Verbraucher abgibt. Bei einer Heizvorrichtung im Sinne der vorliegenden Erfindung kann es sich beispielsweise um ein Fernwärmenetz handeln. Ein solches Fernwärmenetz wird von einer Wärmequelle, beispielsweise im Kraftwerk gespeist. Die erzeugte thermische Energie wird so einem thermischen Verbraucher zugeführt. Ein thermischer Verbraucher, beispielsweise eine Gebäudeheizung oder ähnliches, entnimmt einem Wärmeträgermedium thermische Energie und kühlt das Wärmeträgermedium dabei ab. Heizvorrichtungen im Sinne der vorliegenden Erfindung sind ebenfalls weitere Heizvorrichtungen, beispielsweise zur Erwärmung im Zusammenhang mit industriellen Prozessen oder ähnlichem.

Kraft-Wärme-Kraftwerke im Sinne der vorliegenden Erfindung sind alle Kraftwerke, bei denen neben einem Prozess zur Bereitstellung mechanischer oder elektrischer Energie auch thermische Energie anfällt und dabei diese thermische Energie zumindest teilweise ebenfalls genutzt wird. Insbesondere umfasst ein Kraft-Wärme-Kraftwerk im Sinne der vorliegenden Erfindung die Kombination eines oben beschriebenen Energieerzeugers mit einer zuvor beschriebenen Heizvorrichtung. Beispielsweise ist ein Kraft-Wärme-Kraftwerk im Sinne der vorliegenden Erfindung ein Kraftwerk zur Erzeugung elektrischer Energie, das eine thermische Abwärme zumindest teilweise in ein Fernwärmenetz einspeist oder für andere Heizzwecke bereitstellt.

Arbeitsmedien im Sinne der vorliegenden Erfindung sind alle Arten von Medien, die geeignet sind, thermische Energie aufzunehmen und zu transportieren. Insbesondere sind Arbeitsmedien im Sinne der vorliegenden Erfindung beispielsweise Fluide, die ein Leitungssystem durchströmen und dabei thermische Energie von einem Ort zu einem anderen transportieren. Ein solches Arbeitsmedium kann beispielsweise Wasser sein.

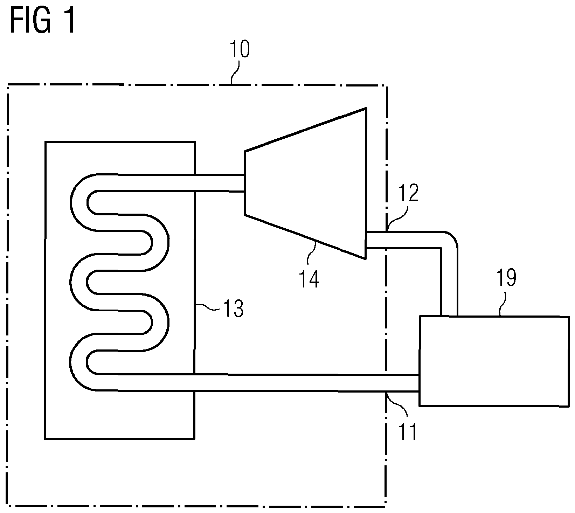

Figur 1 zeigt eine schematische Darstellung eines Clausius-Rankine-Prozesses. Ein Arbeitsmedium, vorzugsweise Wasser, wird an einem Eingang 11 einem Energieerzeuger 10 zugeführt. Das Arbeitsmedium wird zunächst in einem Kessel 13 erhitzt. Dabei geht das Arbeitsmedium von einem flüssigen in einen gasförmigen Zustand über. Das dampfförmige Arbeitsmedium dringt aus dem Kessel 13 aus und treibt daraufhin eine Turbine 14 an. Die Turbine wird dabei in Rotation versetzt und kann beispielsweise einen Generator zur Erzeugung elektrischer Energie antreiben. Nachdem das gasförmige Arbeitsmedium die Turbine 14 durchströmt hat, tritt es am Ausgang 12 des Energieerzeugers 10 aus und wird in der Kühlvorrichtung 19 abgekühlt, bevor es am Eingang 11 erneut wieder dem Energieerzeuger 10 zugeführt wird.

Bei einem reinen Elektrizitätskraftwerk wird dabei die thermische Energie, die dem Arbeitsmedium in der Abkühlvorrichtung 19 entzogen wird, an die Umgebung ungenutzt abgegeben. Alternativ kann im Sinne einer Kraft-Wärme-Kopplung diese thermische Energie auch für Heizzwecke verwendet werden.

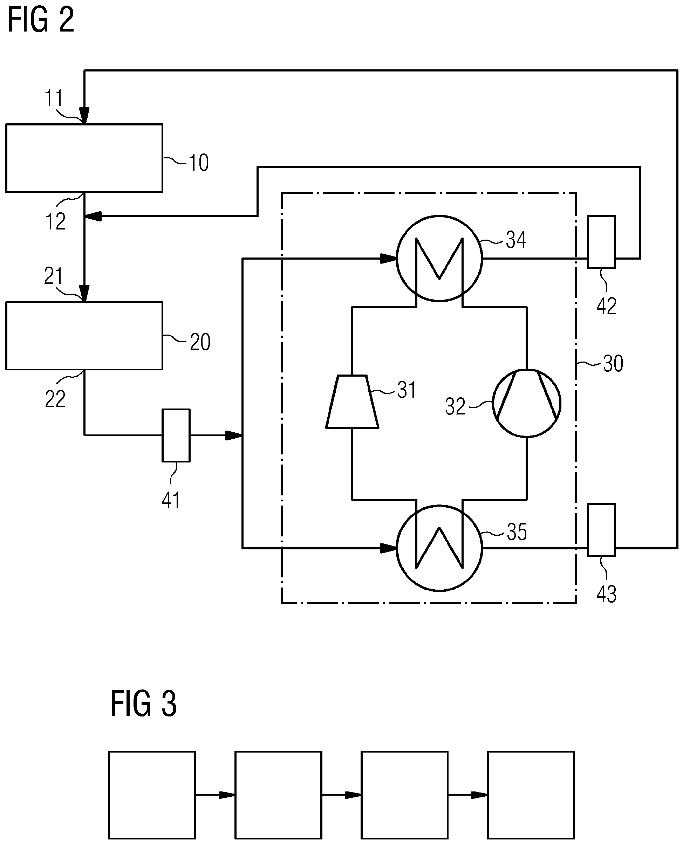

Figur 2 zeigt schematisch ein Kraft-Wärme-Kraftwerk gemäß einer Ausführungsform der vorliegenden Erfindung. Das Arbeitsmedium wird am Eingang 11 dem Energieerzeuger 10 zugeführt. Beispielsweise kann es sich bei diesem Energieerzeuger um ein Elektrizitätskraftwerk handeln, das gemäß dem oben beschriebenen Clausius-Rankine-Prozess über eine Turbine 14 und einen damit gekoppelten Generator elektrische Energie erzeugt.

Beispielsweise kann dabei durch die Verbrennung von fossilen Energieträgern wie Kohle, Erdöl oder Erdgas oder alternativer Energieträger wie Biogas oder Holz das Arbeitsmedium erhitzt und verdampft werden. Alternativ thermische Prozesse, beispielsweise durch radioaktiven Zerfall, chemische Reaktionen oder ähnliches sind ebenso möglich.

Nachdem das Arbeitsmedium eine Turbine durchströmt und dabei angetrieben hat, oder auf alternative Art die gewünschte Energieform bereitgestellt wurde, tritt das Arbeitsmedium am Ausgang 12 des Energieerzeugers 10 aus. Dabei besitzt das Arbeitsmedium an diesem Ausgang 12 noch immer eine Temperatur, die höher ist, als die Temperatur des Arbeitsmediums am Eingang 11 des Energieerzeugers 10.

Um diese überschüssige thermische Energie des Arbeitsmediums nicht ungenutzt an die Umgebung abgeben zu müssen, wird das Arbeitsmedium einer thermischen Heizvorrichtung 20 zugeführt. Die Vorlauftemperatur am Eingang 21 der Heizvorrichtung 20 beträgt dabei ca. 115 Grad Celsius. Je nach Anwendungsfall sind auch Temperaturen im Bereich von 100 bis 130 Grad Celsius, gegebenenfalls auch Temperaturen zwischen 85 und 150 Grad Celsius möglich.

Das Arbeitsmedium durchströmt daraufhin die Heizvorrichtung 20. Dabei können in der Heizvorrichtung 20 betriebliche Verbraucher dem Arbeitsmedium thermische Energie entnehmen. Auf diese Weise können innerhalb der Heizvorrichtung 20 befindliche Verbraucher erwärmt und beheizt werden.

Nachdem das Arbeitsmedium die Heizvorrichtung 20 durchflossen hat, tritt es am Ausgang 22 der Heizvorrichtung 20 aus. An dieser Stelle besitzt das Arbeitsmedium üblicherweise eine Rücklauftemperatur von ca. 90 Grad Celsius. Je nach verwendeter Vorlauftemperatur und Energieabnahme innerhalb der Heizvorrichtung 20 schwankt dabei die Rücklauftemperaturen am Ausgang der Heizvorrichtung zwischen 75 und 100 Grad Celsius. Je nach Anwendungsfall sind auch Rücklauftemperaturen zwischen 60 und 120 Grad Celsius möglich.

Bei relativ hohen Vorlauftemperaturen am Eingang 21 der Heizvorrichtung 20, und/oder bei einer sehr geringen thermischen Energieabnahme innerhalb der Heizvorrichtung 20 durch die angeschlossenen Verbraucher, kann die Rücklauftemperatur der Heizvorrichtung 20 höher sein als die erforderliche Vorlauftemperatur am Eingang 11 des Energieerzeugers 10. Zur weiteren Absenkung der Temperatur des Arbeitsmediums zwischen dem Ausgang 22 der Heizvorrichtung 20 und dem Eingang 11 des Energieerzeugers 10, wird das Arbeitsmedium daher durch die Wärmepumpe 30 weiter abgekühlt. Hierzu wird das Arbeitsmedium durch den Verdampfer 35 der Wärmepumpe 30 geleitet. Dabei wird dem Arbeitsmedium durch die Wärmepumpe 30 thermische Energie entzogen und das Wärmeträgermedium auf die gewünschte Vorlauftemperatur des Energieerzeugers 10 abgekühlt.

Vorzugsweise sollte das Arbeitsmedium dabei auf eine Temperatur von ca. 75 Grad Celsius abgekühlt werden. Je nach Anwendungsfall sind auch Temperaturen zwischen 60 und 90 Grad Celsius möglich. In bestimmten Anwendungsfällen sind darüber hinaus auch Temperaturen des abgekühlten Arbeitsmediums zwischen 50 und 100 Grad Celsius möglich.

Durch das Abkühlen des Arbeitsmediums mit Hilfe der Wärmepumpe 30 wird die dabei entnommene thermische Energie nicht ungenutzt an die Umgebung abgegeben, sondern steht für eine Nutzung an anderer Stelle weiter zur Verfügung. Beispielsweise kann damit, wie im Folgenden näher erläutert wird, die Vorlauftemperatur der Heizvorrichtung 20 angehoben werden. Alternative Anwendungen und Einsatzgebiete für die thermische Energie, die somit durch die Wärmepumpe 30 bereitgestellt werden kann, sind ebenso möglich.

Zur Anhebung der Vorlauftemperatur am Eingang 21 der Heizvorrichtung 20 kann dabei beispielsweise der Kondensator 34 der Wärmepumpe 30 unmittelbar in den Strom des Arbeitsmediums zwischen Ausgang 12 des Energieerzeugers 10 und Eingang 21 der Heizvorrichtung 20 angekoppelt sein (nicht dargestellt).

Alternativ ist es auch möglich, den Strom des Arbeitsmediums nach dem Ausgang 22 der Heizvorrichtung 20 aufzuspalten. Somit wird ein Teil des Arbeitsmediums durch den Verdampfer 35 auf die gewünschte Vorlauftemperatur des Energieerzeugers 10 abgekühlt. Ein weiterer Teil des Arbeitsmediums wird dem Kondensator 34 der Wärmepumpe 30 zugeführt und dabei auf ein höheres Temperaturniveau angehoben. Der so erwärmte Teil des Arbeitsmediums wird daraufhin mit dem aus dem Energieerzeuger 10 kommenden Wärmeträgermedium vermischt und gemeinsam dem Eingang 21 der Heizvorrichtung 20 zugeführt.

Alternativ ist es auch möglich, Teile des beschriebenen Kreislaufes des Arbeitsmediums voneinander zu trennen, so dass die jeweiligen Bereiche von unterschiedlichen Medien durchströmt werden. Beispielsweise kann innerhalb des Energieerzeugers 10 ein erstes Arbeitsmedium verwendet werden, während die Heizvorrichtung 20 von einem weiteren Arbeits- oder Wärmeträgermedium durchströmt wird. Die Kopplung der einzelnen Kreisläufe erfolgt hierbei mittels geeigneter Wärmeübertrager.

Die Massentröme am Verdampfer 35 und am Kondensator 34 der Wärmepumpe 30 müssen sich dabei nicht zwangsläufig entsprechen. Ebenso ist es möglich, dass am Verdampfer 35 und am Kondensator 34 unterschiedliche Massenströme des Arbeitsmediums vorbeiströmen. Soll beispielsweise am Verdampfer 35 das Arbeitsmedium nur um einen relativ geringen Temperaturwert abgekühlt werden, während das Arbeitsmedium am Kondensator 34 um eine größere Temperaturdifferenz angehoben werden soll, so kann dies dadurch kompensiert werden, dass am Verdampfer 35 ein größerer Massenstrom vorbeigeführt wird und am Kondensator 34 ein entsprechend geringerer Massenstrom des Arbeitsmediums erhitzt wird.

So ist es beispielsweise möglich, dass der Verdampfer 35 das Arbeitsmedium nur um 15 Kelvin abkühlt, während der Kondensator 34 das an ihm vorbeiströmende Arbeitsmedium 25 Kelvin oder mehr erwärmt. Grundsätzlich ist es alternativ selbstverständlich ebenso möglich, am Kondensator 35 einen geringen Massenstrom um eine große Temperaturdifferenz abzukühlen und dabei gleichzeitig am Kondensator 34 einen größeren Massenstrom nur um eine geringe Temperaturdifferenz zu erwärmen.

Auf die oben beschriebene Weise ist eine besonders flexible Ausgestaltung und Anhebung bzw. Absenkung der jeweiligen Temperaturniveaus möglich, so dass für den jeweiligen Anwendungsfall stets eine bestmögliche Aufteilung der Volumenströme des Arbeitsmediums mit den dabei verbundenen Anhebungen und Absenkungen der Temperaturniveaus möglich ist.

Die Flexibilität des erfindungsgemäßen Aufbaus kann darüber hinaus noch zusätzlich erhöht werden, indem ein oder mehrere thermische Speicher 41, 42 und 43 in den Kreislauf des Arbeitsmediums integriert werden. Solche thermischen Speicher 41, 42 und 43 sind in der Lage, Wärmeenergie aufzunehmen und zu speichern. Einfache Ausführungsformen eines solchen thermischen Speichers umfassen dabei beispielsweise ein Speichermedium, das erwärmt oder abgekühlt wird. Zu einem späteren Zeitpunkt kann dieses Speichermedium von einem flüssigen oder gasförmigen Wärmeträgermedium durchströmt werden und dabei dieses Wärmeträgermedium erwärmen oder abkühlen. Beispielsweise kann ein solcher thermischer Speicher im einfachsten Fall aus einem großvolumigen Tank mit Wasser oder einem Öl gebildet werden.

Alternative und effizientere thermischen Speicher umfassen dagegen Substanzen, die nicht nur einfach erwärmt oder abgekühlt werden, sondern bei denen sich darüber hinaus auch noch der Aggregatzustand des Speichermediums ändert. Solche, sogenannte Latentwärmespeicher (phase change material, PCM) umfassen üblicherweise spezifische Substanzen oder Parafine, die sehr viel Wärmeenergie aufnehmen. Der Vorteil dieser thermischen Speichertechnik beruht darauf, in einem kleinen durch die Schmelztemperatur des eingesetzten Speichermaterials festgelegten Temperaturbereich, sehr viel Wärmeenergie speichern zu können.

Ein solches thermisches Speicherelement 41 kann beispielsweise nach dem Ausgang 22 der Heizvorrichtung 20 angeordnet sein, um im Falle einer relativ hohen Rücklauftemperatur, beispielsweise aufgrund einer nur geringen Wärmeabnahme oder einer verhältnismäßig hohen Vorlauftemperatur, einen Teil der thermischen Energie aus dem Rücklauf der Heizvorrichtung 20 zwischenzuspeichern. Darüber hinaus kann ein weiterer thermischer Energiespeicher 42 zwischen dem Kondensator 34 der Wärmepumpe 30 und dem Eingang 21 der Heizvorrichtung 20 angeordnet sein. Dieser Wärmespeicher 42 ermöglicht eine zeitweilige Speicherung thermischer Energie für den Fall, dass die Wärmepumpe 30 mehr Wärmeenergie über den Kondensator 34 abgibt, als in der Heizvorrichtung 20 benötigt wird. Ein dritter thermischer Speicher 43 kann darüber hinaus zwischen dem Verdampfer 35 der Wärmepumpe 30 und dem Eingang 11 des Energieerzeugers 10 angeordnet sein. Dieser thermische Speicher 34 kann beispielsweise bei einer überdurchschnittlichen Abkühlung des Arbeitsmediums durch den Verdampfer 35 diese Abkühlung zeitweilig ausgleichen und daraufhin zu einem späteren Zeitpunkt, falls das Arbeitsmedium durch den Verdampfer 35 weniger stark abgekühlt wird, die überschüssige Wärmeenergie aufnehmen und somit das Arbeitsmedium auf die gewünschte Temperatur abkühlen.

Für die Abkühlung und Erwärmung des Arbeitsmediums können bekannte Wärmepumpen zum Einsatz kommen, beispielsweise Dampfkompressionswärmepumpen mit einem Kompressor 32 und einem Expansionsventil 31. Selbstverständlich sind grundsätzlich auch andere Arten von Wärmepumpen möglich, sofern sie die erforderlichen Volumenströme des s auf die benötigten Temperaturen abzukühlen bzw. zu erwärmen können.

Um auf der Kondensatorseite der Wärmepumpe eine für den Vorlauf der Heizvorrichtung genügend hohe Temperatur zu erreichen, sind hierzu jedoch spezielle Hochtemperaturwärmepumpen erforderlich. Diese Hochtemperaturwärmepumpen sind in der Lage, auf der Kondensatorseite das Wärmeträgermedium auf Temperaturen von 115 Grad Celsius, je nach Anwendungsfall auch 130 oder 150 Grad Celsius oder gegebenenfalls bis hin zu 180 Grad Celsius zu erreichen.

Figur 3 zeigt eine Ausführungsform für ein Verfahren zum Betrieb eines Kraftwerks mit Kraft-Wärme-Kopplung. Dabei wird zunächst in dem Energieerzeuger 10 ein Arbeitsmedium erwärmt. Nach dem Austritt des erhitzten Arbeitsmediums aus dem Energieerzeuger 10 durchströmt das Arbeitsmedium einer Heizvorrichtung 20. Dabei kühlt sich das Arbeitsmedium ab. Entsprechend der Vorlauftemperatur kann am Eingang 21 der Heizvorrichtung 20 und der Wärmeabnahme innerhalb der Heizvorrichtung 20 variiert die Rücklauftemperatur am Ausgang 22 der Heizvorrichtung 20. Das Arbeitsmedium wird daraufhin zumindest teilweise durch eine Wärmepumpe 30 zusätzlich abgekühlt. Anschließend wird das so abgekühlte Arbeitsmedium dem Eingang 11 des Energieerzeugers 10 zugeführt. Somit kann das Arbeitsmedium auf die erforderliche Vorlauftemperatur für den Energieerzeuger 10 abgekühlt werden, ohne dass thermische Energie an die Umgebung abgegeben werden muss.

In einer speziellen Ausführungsform der vorliegenden Erfindung wird ein Teil des Arbeitsmediums durch die Wärmepumpe erwärmt, nachdem das Arbeitsmedium die Heizvorrichtung 20 durchströmt hat und am Ausgang 22 ausgetreten ist. Dieses erwärmte Arbeitsmedium wird daraufhin erneut dem Eingang 21 der Heizvorrichtung 20 zugeführt und steht damit erneut für Heizzwecke zur Verfügung. Auf diese Weise wird die Wärmeenergie, die dem Arbeitsmedium zur Abkühlung des Vorlaufs für den Energieerzeuger 10 entnommen wurde, erneut für Heizzwecke verwendet und geht somit nicht verloren.

Um auch bei einer nur geringen Wärmeabnahme innerhalb der Heizvorrichtung 20 möglichst wenig Energie an die Umgebung abgeben zu müssen, wird thermische Energie, die durch die Wärmepumpe abgegeben wird, in Zeiten nur geringem Wärmebedarfs in der Heizvorrichtung 20 in einem oder mehreren thermischen Speichern 41, 42 und 43 zwischengespeichert. Die somit zwischengespeicherte thermische Energie steht dann für spätere Verwendung zur Verfügung, wenn die Verbraucher innerhalb der Heizvorrichtung 20 einen erhöhten Wärmebedarf haben, aber andererseits durch den Energieerzeuger 10 nur eine geringe Wärmeabgabe erfolgt.

Zusammenfassend betrifft die vorliegende Erfindung ein Kraft-Wärme-Kraftwerk und ein Verfahren zum Betrieb eines Kraft-Wärme-Kraftwerks, bei dem ein Arbeitsmedium zwischen einem Ausgang 22 einer thermischen Heizvorrichtung 20 und einem Eingang 11 eines Energieerzeugers 10 der Kraft-Wärme-Kopplung zusätzlich durch eine geeignete Wärmepumpe 30 abgekühlt wird. Die auf diese Weise gewonnene thermische Energie steht daraufhin erneut für Heizzwecke innerhalb der thermischen Heizvorrichtung 20 zur Verfügung.

## Patentansprüche

1. Kraft-Wärme- Kraftwerk, umfassend:
eine Heizvorrichtung (20) mit einem Eingang (21), in den ein Arbeitsmedium hineinströmt und mit einem Ausgang (22), aus dem das Arbeitsmedium herausströmt;
einen Energieerzeuger (10) mit einem Eingang (11), in den das Arbeitsmedium hineinströmt und mit einem Ausgang (12), aus dem das Arbeitsmedium herausströmt; und
eine Wärmepumpe (30),
**dadurch gekennzeichnet, dass**
die Wärmepumpe dazu ausgelegt ist, mindestens einen Teil des Arbeitsmediums aus dem Ausgang (22) der Heizvorrichtung (20) abzukühlen; und
die Wärmepumpe (30) ferner einen Teil des Arbeitsmediums aus dem Ausgang (22) der Heizvorrichtung (20) erwärmt und das erwärmte Arbeitsmedium dem Eingang (21) der Heizvorrichtung (20) zugeführt wird.

2. Kraft-Wärme-Kraftwerk nach Anspruch 1, wobei das durch die Wärmepumpe (30) erwärmte Arbeitsmedium eine Temperatur von mehr als 70 Grad Celsius, vorzugsweise von mehr als 100 Grad Celsius, besonders bevorzugt mehr als 115 Grad Celsius, hat.

3. Kraft-Wärme-Kraftwerk nach einem der vorherigen Ansprüche, wobei der Massenstrom des Arbeitsmediums, das von der Wärmepumpe (30) abgekühlt wird kleiner ist, als der Massenstrom des Arbeitsmediums, das von der Wärmepumpe (30) erwärmt wird.

4. Kraft-Wärme-Kraftwerk nach einem der vorherigen Ansprüche, ferner umfassend mindestens einen thermischen Speicher (41, 42, 43).

5. Kraft-Wärme-Kraftwerk nach Anspruch 4, wobei der thermische Speicher (41, 42, 43) ein Phasenwechselmedium umfasst.

6. Kraft-Wärme-Kraftwerk nach einem der vorherigen Ansprüche, wobei die Wärmepumpe (30) eine Hochtemperatur-Wärmepumpe ist.

7. Vorrichtung nach einem der vorherigen Ansprüche, wobei der Energieerzeuger (10) elektrische Energie erzeugt.

8. Kraft-Wärme-Kraftwerk nach einem der vorherigen Ansprüche, wobei die Wärmepumpe (30) unabhängig von dem Energieerzeuger (10) betrieben wird.

9. Verfahren zum Betrieb eines Kraft-Wärme-Kraftwerks, umfassend die Schritte:
Erwärmen eines Arbeitsmediums in einem Energieerzeuger (10);
Durchströmen einer Heizvorrichtung (20) mit dem Arbeitsmedium aus dem Energieerzeuger (10); und
Abkühlen mindestens eines Teils des Arbeitsmediums durch eine Wärmepumpe (30),
**dadurch gekennzeichnet, dass**
das Arbeitsmedium durch die Wärmepumpe (30) abgekühlt wird, nachdem das Arbeitsmedium die Heizvorrichtung (20) durchströmt hat;
wobei das Verfahren ferner die folgenden Schritte umfasst:
Zuführen des abgekühlten Arbeitsmediums an einen Eingang (11) des Energieerzeugers (10);
Erwärmen eines Teils des Arbeitsmediums durch die Wärmepumpe (30), nachdem das Arbeitsmedium die Heizvorrichtung (20) durchströmt hat; und
Zuführen des durch die Wärmepumpe (30) erwärmten Arbeitsmediums an dem Eingang (21) der Heizvorrichtung (20).

10. Verfahren nach Anspruch 9, ferner umfassend einen Schritt zum Speichern thermischen Energie, die durch die Wärmepumpe (30) abgegeben wird.

11. Verfahren nach Anspruch 9 oder 10, ferner umfassend einen Schritt zum Speichern thermischen Energie, zwischen der Heizvorrichtung (20) und der Wärmepumpe (30).

## Claims

1. Cogeneration power plant, comprising:
a heating device (20) with an inlet (21) into which a working medium flows, and with an outlet (22) out of which the working medium flows;
an energy generator (10) with an inlet (11) into which the working medium flows, and with an outlet (12) out of which the working medium flows; and
a heat pump (30),
**characterized in that**
the heat pump is configured for cooling at least some of the working medium from the outlet (22) of the heating device (20); and
the heat pump (30) further heats some of the working medium from the outlet (22) of the heating device (20) and the heated working medium is supplied to the inlet (21) of the heating device (20).

2. Cogeneration power plant according to Claim 1, wherein the working medium heated by the heat pump (30) is at a temperature above 70 degrees Celsius, preferably above 100 degrees Celsius, particularly preferably above 115 degrees Celsius.

3. Cogeneration power plant according to one of the preceding claims, wherein the mass flow rate of the working medium which is cooled by the heat pump (30) is smaller than the mass flow rate of the working medium which is heated by the heat pump (30).

4. Cogeneration power plant according to one of the preceding claims, further comprising at least one thermal storage unit (41, 42, 43).

5. Cogeneration power plant according to Claim 4, wherein the thermal storage unit (41, 42, 43) comprises a phase-change medium.

6. Cogeneration power plant according to one of the preceding claims, wherein the heat pump (30) is a high-temperature heat pump.

7. Cogeneration power plant according to one of the preceding claims, wherein the energy generator (10) generates electrical energy.

8. Cogeneration power plant according to one of the preceding claims, wherein the heat pump (30) is operated independently of the energy generator (10).

9. Method for operating a cogeneration power plant, comprising the steps of:
heating a working medium in an energy generator (10);
causing the working medium from the energy generator (10) to flow through a heating device (20); and
cooling at least some of the working medium by means of a heat pump (30),
**characterized in that**
the working medium is cooled by means of the heat pump (30) after the working medium has flowed through the heating device (20);
wherein the method further comprises the following steps:
supplying the cooled working medium to an inlet (11) of the energy generator (10);
heating some of the working medium by means of the heat pump (30), after the working medium has flowed through the heating device (20); and
supplying the working medium, which has been heated by the heat pump (30), to the inlet (21) of the heating device (20).

10. Method according to Claim 9, further comprising a step of storing thermal energy given off by the heat pump (30).

11. Method according to Claim 9 or 10, further comprising a step of storing thermal energy, between the heating device (20) and the heat pump (30).

## Revendications

1. Centrale de cogénération, comprenant :
un dispositif (20) de chauffage ayant une entrée (21), dans laquelle entre un fluide de travail, et une sortie (22), de laquelle sort le fluide de travail ;
un producteur (10) d'énergie ayant une entrée (11), dans laquelle entre le fluide de travail, et une sortie (12), de laquelle sort le fluide de travail et
une pompe à chaleur (30),
**caractérisée en ce que**
la pompe à chaleur est conçue pour refroidir au moins une partie du fluide de travail sortant de la sortie (22) du dispositif (20) de chauffage et
la pompe à chaleur (30) chauffe, en outre, une partie du fluide de travail sortant de la sortie (22) du dispositif (20) de chauffage et envoie le fluide de travail chauffé à l'entrée (21) du dispositif (20) de chauffage.

2. Centrale de cogénération suivant la revendication 1, dans laquelle le fluide de travail chauffé dans la pompe à chaleur (30) a une température de plus de 40 degrés Celsius, de préférence de plus de 100 degrés Celsius, d'une manière particulièrement préférée de plus de 115 degrés Celsius.

3. Centrale de cogénération suivant l'une des revendications précédentes, dans laquelle le courant massique du fluide de travail refroidi par la pompe à chaleur (30) est plus petit que le courant massique du fluide de travail chauffé par la pompe à chaleur (30).

4. Centrale de cogénération suivant l'une des revendications précédentes, comprenant, en outre, au moins un accumulateur (41, 42, 43) thermique.

5. Centrale de cogénération suivant la revendication 4, dans laquelle l'accumulateur (14, 42, 43) thermique comprend un milieu à changement de phase.

6. Centrale de cogénération suivant l'une des revendications précédentes, dans laquelle la pompe à chaleur (30) est une pompe à chaleur à haute température.

7. Installation suivant l'une des revendications précédentes, dans laquelle le producteur (10) d'énergie produit de l'énergie électrique.

8. Centrale de cogénération suivant l'une des revendications précédentes, dans laquelle la pompe à chaleur (30) fonctionne indépendamment du producteur (10) d'énergie.

9. Procédé pour faire fonctionner une centrale de cogénération, comprenant les stades :
chauffer un fluide de travail dans un producteur (10) d'énergie ;
faire passer, dans un dispositif (20) de chauffage, le fluide de travail sortant du producteur (10) d'énergie et
refroidir au moins une partie du fluide de travail par une pompe à chaleur (30),
**caractérisé en ce que**
le fluide de travail est refroidi par la pompe à chaleur (30), après que le fluide de travail a passé dans le dispositif (20) de chauffage,
dans lequel le procédé comprend, en outre, les stades suivants :
envoyer le fluide de travail refroidi à une entrée (11) du producteur (10) d'énergie,
chauffer une partie du fluide de travail par la pompe à chaleur (30), après que le fluide de travail a passé dans le dispositif (20) de chauffage et
envoyer le fluide de travail chauffé par la pompe à chaleur (30) à l'entrée (21) du dispositif (20) de chauffage.

10. Procédé suivant la revendication 9, comprenant, en outre, un stade d'accumulation d'énergie thermique, qui est cédée par la pompe à chaleur (30).

11. Procédé suivant la revendication 9 ou 10, comprenant, en outre, un stade d'accumulation d'énergie thermique, entre le dispositif (20) de chauffage et la pompe à chaleur (30).
